(19) **Europäisches Patentamt**
**European Patent Office**
**Office européen des brevets**

(11) **EP 1 802 061 B1**

(12) **EUROPEAN PATENT SPECIFICATION**

(45) Date of publication and mention
of the grant of the patent:
**20.08.2008 Bulletin 2008/34**

(51) Int Cl.:
**H04L 25/03** *(2006.01)*

(21) Application number: **05112539.1**

(22) Date of filing: **20.12.2005**

(54) **Correction circuit for improving performance in a channel decoder**

Korrekturschaltung zur Funktionsverbesserung in einem Kanaldekoder

Circuit de correction pour améliorer la performance dans un décodeur de canal

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(43) Date of publication of application:
**27.06.2007 Bulletin 2007/26**

(73) Proprietor: **Research In Motion Limited**
**Waterloo, Ontario N2L 3W8 (CA)**

(72) Inventors:
• **Simmons, Sean**
**Waterloo, Ontario N2T 1E7 (CA)**

• **Wu, Huan**
**Kanata, Ontario K2M 2W8 (CA)**
• **Kemenczy, Zoltan**
**Mississauga, Ontario L5L 2L8 (CA)**

(74) Representative: **Rickard, David John et al**
**26 Mallinson Road**
**London SW11 1BP (GB)**

(56) References cited:
**EP-A- 0 966 113**      **WO-A-20/04010665**
**US-A1- 2002 159 546**      **US-A1- 2005 018 794**

## Description

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyright rights whatsoever.

The present specification relates to a mobile communication system, in particular preferably to a correction circuit for improving performance in a channel decoder of a receiver.

GSM (Global Systems for Mobile Communications) is the dominant world standard for 2G/2.5G wireless voice and data communications. EDGE (Enhanced Data rates for GSM Evolution) is a 3G technology that provides increased data transmission speeds of up to 384 kbit/s within the existing GSM spectrum. EDGE is an enhancement to GPRS (General Packet Radio Service) and is becoming more widely used because it effectively triples the gross data rate offered by GSM.

A major source of performance degradation in wireless telephony and data terminal products is ambient noise. Since ambient noise tends to vary significantly from environment to environment, reducing or eliminating the noise presents a challenge.

In a typical GSM communication system, speech and/or data is encoded at the source and transmitted over a network to a receiver. Upon receipt of the transmitted data, the receiver performs channel equalization and decoding steps to return the speech and/or data to a recognizable form for delivery to the user.

The channel decoder used in a GSM system is typically a forward error correction (FEC) decoder, which operates on the channel equalization output of four consecutive data transmission bursts. Conventional equalizers, such as the Viterbi equalizer, for example, do not take into account the signal-to-noise ratio (SNR) fluctuations between the data transmission bursts due to the fading nature of the channel. As such, the soft decision (SD) output of the equalizer does not reflect the input SNR. The stripping of SNR information from the SD compromises the performance of the channel decoder that follows and thus the quality of the speech and/or data that is delivered to the user. A true Maximum A posteriori Probability (MAP) equalizer accounts for the SNR, however, this type of equalizer is much more complicated than conventional equalizers. It is therefore desirable to restore the SNR information in the SD of a conventional equalizer to improve the performance of the channel decoder.

WO2004/010665 discloses a decision feedback equalizer (DFE) for use in a communication system. The communication system includes a coefficient generator for updating coefficients of a feed forward filter and a feedback filter of the DFE in order to compensate for slicer errors in the equalizer.

## GENERAL DESCRIPTION

In one aspect of the invention, there is provided a soft decision correction circuit for a receiver having a channel equalizer for receiving a burst and generating a soft decision output associated with said burst and a decoder for receiving and decoding a block of bursts including said burst, the soft decision correction circuit being intermediate said channel equalizer and said decoder for calculating a correction factor based on said soft decision output and multiplying said soft decision output in said burst by said correction factor; wherein said correction

factor is $c = \dfrac{m^2_{|sd|}}{\sigma^2_{|sd|}}$, where $m^2_{|sd|}$ is the square of the mean of the absolute value of the soft decision and $\sigma^2_{|sd|}$ is the variance of the absolute value of the soft decision.

## BRIEF DESCRIPTION OF THE DRAWINGS

The specification will be better understood with reference to the following Figures in which like numerals denote like parts and in which:

Figure 1 is a block diagram of a GSM data communication system according to one embodiment;

Figure 2 is block diagram of a correction circuit for improving performance of a channel decoder in the GSM system of Figure 1, according to a first embodiment;

Figure 3 is a graph comparing soft decision output from a MAP (Maximum A posteriori Probability) equalizer and a Viterbi equalizer;

Figure 4 is a graph showing correction factor versus SNR;

Figure 5 is a graph comparing BLER with and without a correction factor for a CS-2 coding scheme;

Figure 6 is a graph comparing USF error rate with and without a correction factor for a CS-2 coding scheme;

Figure 7 is a graph comparing BLER with and without a correction factor for a MCS-6 coding scheme;

Figure 8 is a graph comparing USF error rate with and without a correction factor for a MCS-6 coding scheme;

Figure 9 is a graph comparing BLER for incremental retries; and

Figure 10 is an enlarged portion of the graph of Figure 9.

## DESCRIPTION OF PREFERRED EMBODIMENTS

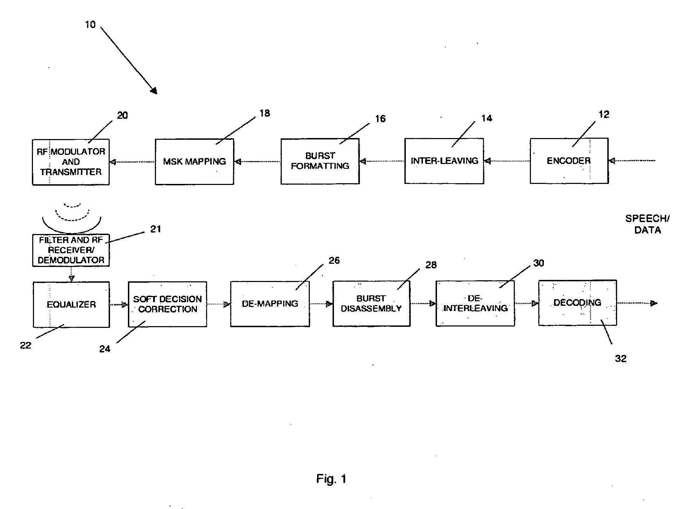

Referring to Figure 1, a block diagram is provided of a GSM mobile data communication system 10 according to one embodiment. The mobile data communication system 10 is operable according to GSM or EDGE communication standards.

As shown, speech and/or data passes though an encoder 12 (i.e. parity encoding and convolutional encoding), an interleaving block 14, a burst formatting block 16 and an MSK (Minimum Shift Keying) mapping block 18 prior to transmission of the encoded information to a receiver at RF modulator and transmitter 20. The encoded information is received and passes through a filter and RF receiver/demodulator 21. Channel equalization is then performed burst-by-burst using a Viterbi equalizer 22. The transmitted data bursts then pass through a correction cicuit 24, a demapping block 26, a burst disassembling block 28, a de-interleaving block 30 and a decoding block 32 prior to being delivered to the user as speech and/or data.

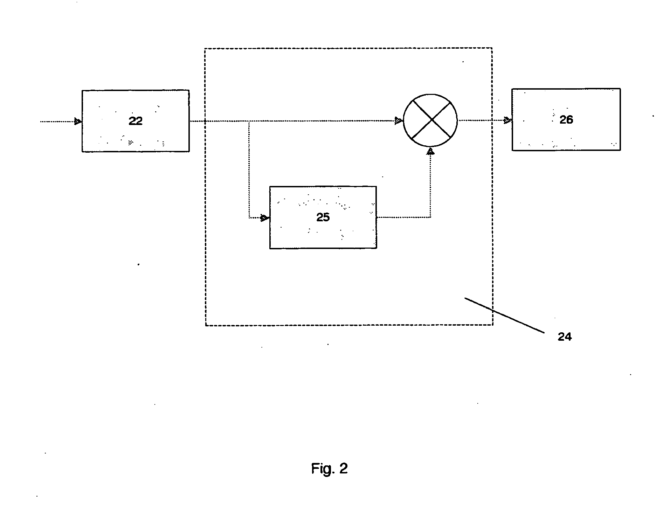

Referring also to Figure 2, the correction circuit 24 estimates a correction factor within correction factor estimation block 25 for each transmission burst based on the soft decision output of the Viterbi equalizer 22. The correction factor is then applied to the soft decision output prior to the burst passing through the subsequent demapping, burst disassembly, de-interleaving and decoding blocks 26, 28, 30, 32, respectively.

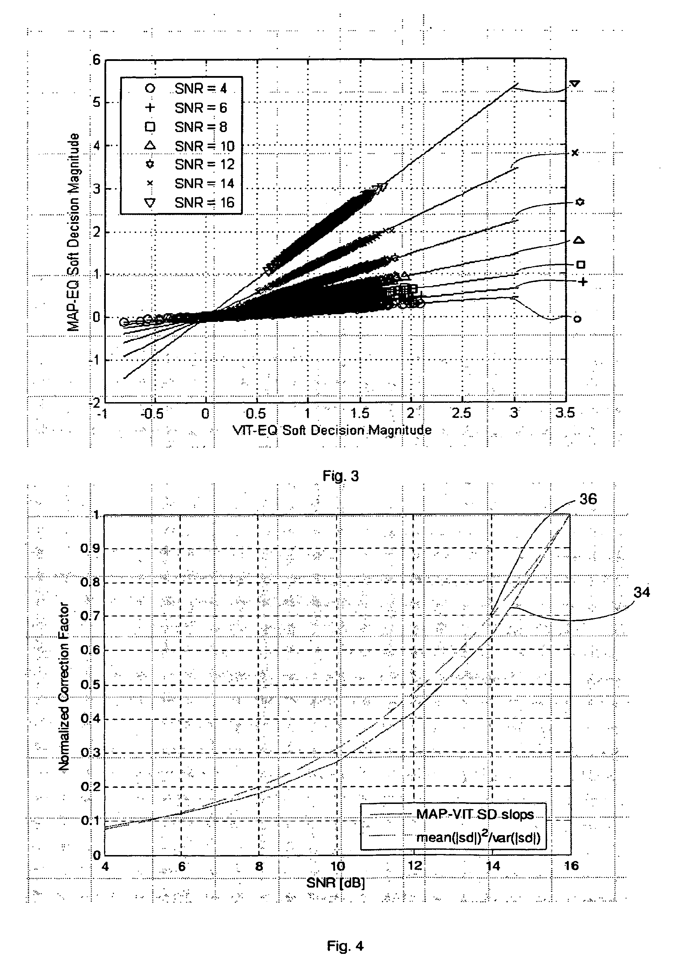

The correction factor compensates for the SNR of each burst. A formula for estimating the correction factor is derived from the relationship between the output of a Maximum A-posteriori Probability (MAP) equalizer and a Viterbi equalizer. The log-likelihood ratio (LLR) output from a MAP equalizer provides optimal soft decision output because the input SNR information is embedded therein. Referring to Figure 3, soft decision output from a MAP equalizer is plotted against soft decision output from a Viterbi equalizer for a common set of input samples. The slopes of the lines in Figure 3 are plotted on curve 34 in Figure 4 versus the SNRs, which are normalized at SNR = 16 dB.

The normalization point is implementation-dependent and is selected based on the dynamic range of the SD and the word length used to represent the SD. The optimum normalization point is determined by performing simulations.

An empirical formula of: $c = \dfrac{m_{lsdl}^2}{\sigma_{lsdl}^2}$, which is

the squared mean of the absolute value of the soft decision divided by the variance of the absolute value of the soft decision, is plotted on curve 36. The curve 36 loosely fits the curve 34, as shown. A normalization constant of 1/8, which was optimized for a particular HW/SW platform with 4-bit SD representation, is further applied to the correction factor. This correction factor formula avoids estimation of input SNR for each burst, which results in a more accurate SNR estimation. Further, the correction factor formula avoids the use of a look-up table that converts the SD of the Viterbi equalizer to the LLR of a MAP equalizer.

Referring back to Figure 1, the type of filter used in block 21 and the type of metrics used in the Viterbi equalizer differ depending on whether the receiver is operating in a GSM or an EDGE environment. A GSM receiver includes a matched filter and correlation metrics are used in the Viterbi equalizer because the noise exiting the matched filter is non-white. In an EDGE receiver, a noise-whitening filter is used and Euclidean distance metrics are used in the Viterbi equalizer because the noise is approximately white. The equivalence of these two metrics has been proven in "Unification of MLSE Receivers and Extension of Time-Varying Channels", Gregory E. Bottomly and Sandeep Chennakeshu, IEEE Trans. Comm. Vol. 46, no. 4, 1998. As such, the soft decision correction circuit can be applied to receivers using both GSM and EDGE technology.

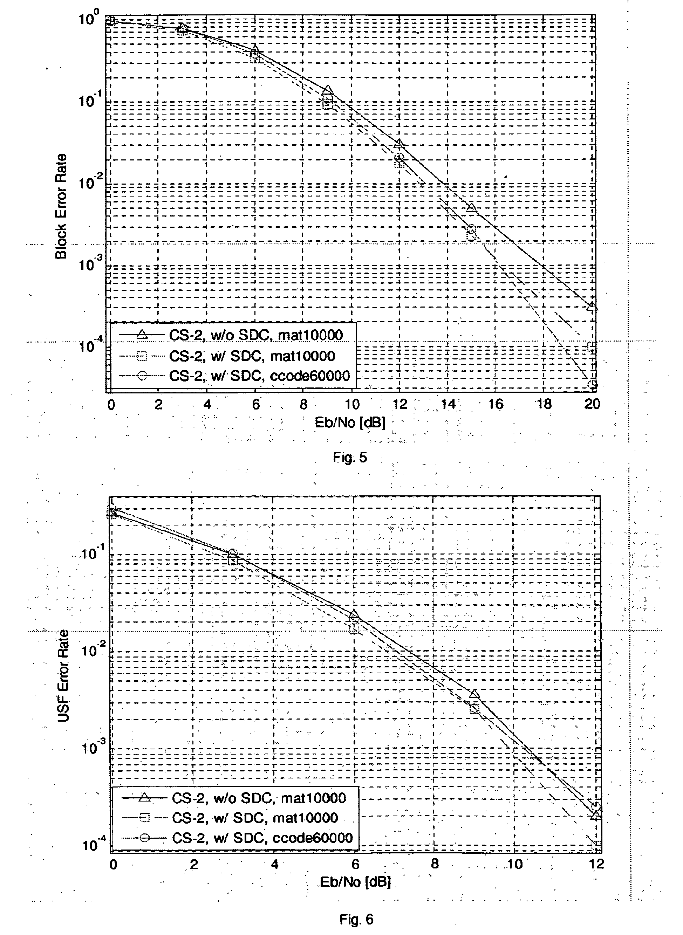

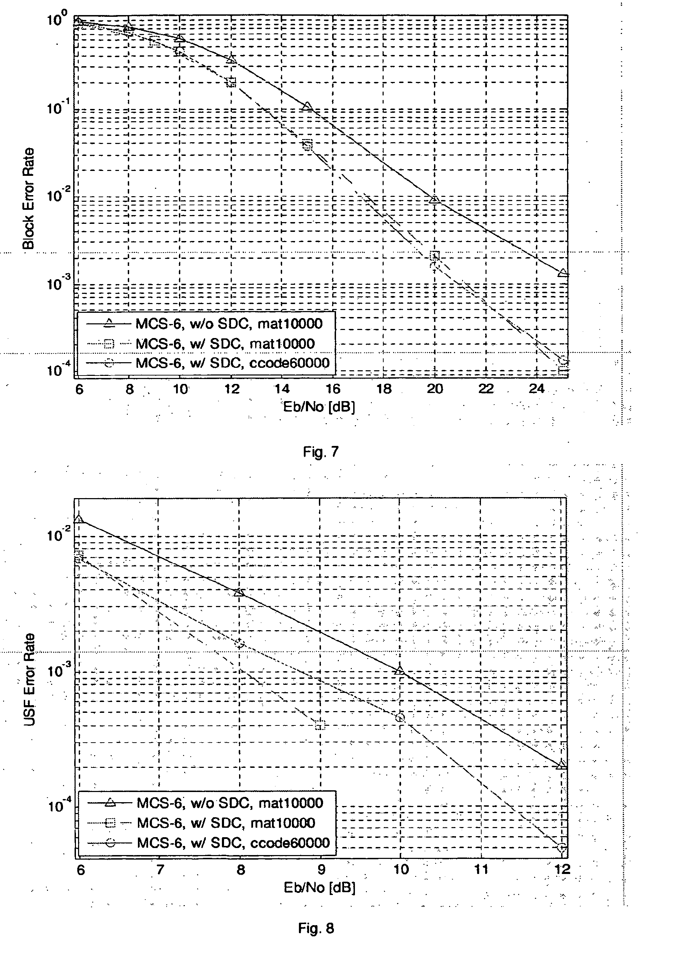

Simulations were performed for a GSM equalizer having a CS-2 coding scheme. The block error rates (BLER) and Uplink State Flag (USF) error rates are shown in Figures 5 and 6, respectively. Similarly, simulations were performed for an EDGE equalizer having a MCS-6 coding scheme. The BLER and USF error rates are shown in Figures 7 and 8, respectively. A channel profile of TUX6.1-50km-1950MHz was used in each of the simulations. As shown, for GSM, the correction factor results in a gain of approximately 0.7 dB at BLER = $10^{-2}$. For EDGE, the correction factor results in a gain of approximately 2.7 dB.

In some cases, the transmission of a data block fails. In these cases, Mobile Stations (MS) that support incremental redundancy reception could request at least one retransmission of the data block with a different puncturing scheme. The soft decisions of each subsequent incremental retry pass through the soft decision correction circuit 24 and a correction factor is applied. In some coding schemes, such as MCS-7, for example, soft decisions at some bit positions are overlapped between the retries. When this occurs, the soft decisions from each transmission are added following application of the correction factor and the combined sum is passed to the decoder.

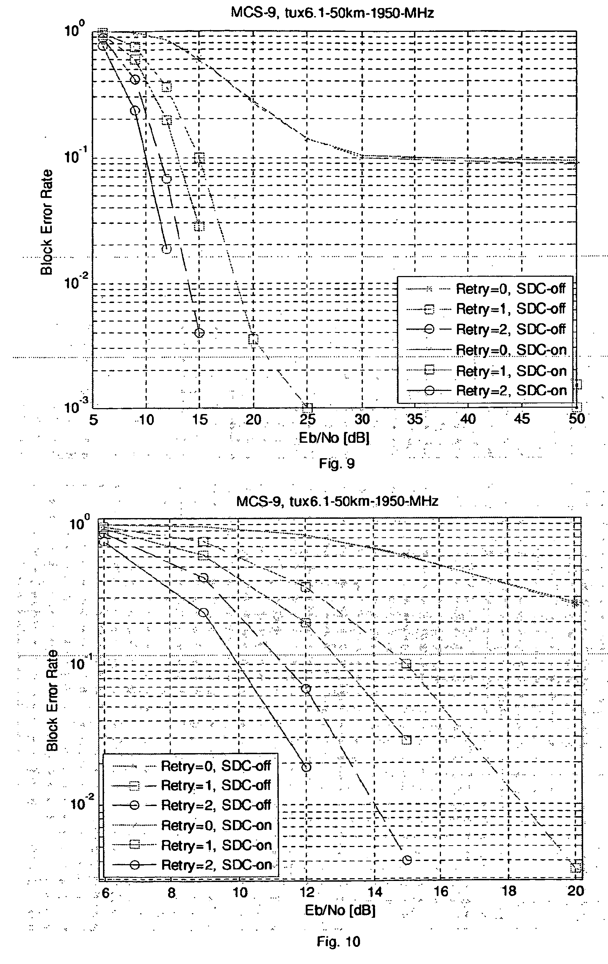

Referring to Figures 9 and 10, the performance of coding scheme MCS-9 in the incremental retries is shown. For a channel profile of TUX6.1-50km-1950MHz, the correction factor results in a gain of approximately 2dB for one retry and a gain of approximately 1.5dB for two retries at BLER = $10^{-1}$.

A specific embodiment has been shown and described herein. However, modifications and variations may occur to those skilled in the art without departing from the scope of the claims.

**Claims**

1. A soft decision correction circuit for a receiver having a channel equalizer (22) for receiving a burst and generating a soft decision output associated with said burst and a decoder (32) for receiving and decoding a block of bursts including said burst, the soft decision correction circuit being intermediate said channel equalizer (22) and said decoder (32) for calculating a correction factor based on said soft decision output and multiplying said soft decision output in said burst by said correction factor, wherein said correction factor is $c = \dfrac{m_{|sd|}^2}{\sigma_{|sd|}^2}$, where $m_{|sd|}^2$ is the

square of the mean of the absolute value of the soft

decision and $\sigma_{|sd|}^2$ is the variance of the absolute value of the soft decision.

2. The circuit of claim 1, further comprising demapping, de-interleaving and de-puncturing blocks (26, 28, 30) provided between said channel equalizer (22) and said decoder (32).

3. The circuit of claim 1 or claim 2, wherein said decoder (32) is a forward error correction decoder.

4. The circuit of any one of claims 1 to 3, wherein said receiver is used in a mobile communication system (10) comprising any of: Global Systems for Mobile Communications "GSM", Enhanced Data rates for GSM Evolution "EDGE" and General Packet Radio Service "GPRS".

5. The circuit of any one of claims 1 to 4, wherein said channel equalizer (22) is a Viterbi equalizer.

6. The circuit of any one of claims 1 to 5, wherein said receiver supports incremental redundancy reception for requesting at least one retransmission of a failed data block including said burst with a different puncturing scheme.

7. A soft decision correction method comprising:

receiving a burst and equalising it to thereby generate a soft decision output associated with said burst;
calculating a correction factor based on said soft decision output;
multiplying said soft decision output in said burst by said correction factor; and decoding a block of bursts including said burst having said correction factor applied;

wherein said correction factor is $c = \dfrac{m_{|sd|}^2}{\sigma_{|sd|}^2}$, where

$m_{|sd|}^2$ is the square of the mean of the absolute value of the soft decision and $\sigma_{|sd|}^2$ is the variance of the absolute value of the soft decision.

8. The method of claim 7, further comprising demapping, de-interleaving and de-puncturing provided prior to decoding said block of bursts.

9. The method of claim 8, further comprising requesting at least one retransmission of a failed data block including said burst with a different puncturing scheme.

10. A mobile data communications system (10) comprising the soft decision correction circuit of any one of claims 1 to 6 for a receiver thereof.

**Patentansprüche**

1. Soft-Decision- (weiche Entscheidung)Korrekturschaltung für einen Empfänger mit einem Kanalentzerrer (22) zum Empfangen eines Bursts und Erzeugen eines Soft-Decision-Ausgangs, der diesem Burst zugeordnet ist, sowie einem Dekoder (32) zum Empfangen und Dekodieren eines Burst-Blocks, welcher das Burst enthält, wobei die Soft-Decision-Korrekturschaltung zwischen dem Kanalentzerrer (22) und dem Dekoder (32) angeordnet ist, um einen Korrekturfaktor auf Basis des Soft-Decision-Ausgangs zu berechnen und den Soft-Decision-Ausgang in dem Burst mit dem Korrekturfaktor zu multiplizieren, wobei der Korrekturfaktor $c = \dfrac{m_{|sd|}^2}{\sigma_{|sd|}^2}$ ist,

wobei $m_{|sd|}^2$ das Quadrat des mittleren absoluten Werts der weichen Entscheidung (Soft Decision)

und $\sigma_{|sd|}^2$ die Varianz des absoluten Werts der weichen Entscheidung ist.

2. Schaltung nach Anspruch 1, ferner umfassend Demapping-, Entschachtelungs- und Depunktierungsblöcke (26, 28, 30), die zwischen dem Kanalentzerrer (22) und dem Dekoder (32) angeordnet sind.

3. Schaltung nach Anspruch 1 oder Anspruch 2, wobei der Dekoder (32) ein Vorwärtsfehlerkorrektur-Dekoder ist.

4. Schaltung nach einem der Ansprüche 1 bis 3, wobei der Empfänger in einem mobilen Kommunikationssystem (10) verwendet wird, welches eines der folgenden umfasst: Global Systems for Mobile Communication "GSM", Enhanced Data rates for GSM Evolution "EDGE" und General Packet Radio Service "GPRS".

**5.** Schaltung nach einem der Ansprüche 1 bis 4, wobei der Kanalentzerrer (22) ein Viterbi-Entzerrer ist.

**6.** Schaltung nach einem der Ansprüche 1 bis 5, wobei der Empfänger den Empfang mit inkrementeller Redundanz unterstützt, um mindestens eine Neuübertragung eines fehlerhaften Datenblocks anzufordern, welche das betreffende Burst mit einem veränderten Punktierungsschema enthält.

**7.** Soft-Decision-Korrekturverfahren, umfassend:

Empfangen und Entzerren eines Bursts, um hierdurch einen Soft-Decision-Ausgang zu erzeugen, der dem Burst zugeordnet ist;
Berechnen eines Korrekturfaktors auf Basis des Soft-Decision-Ausgangs;
Multiplizieren des Soft-Decision-Ausgangs in dem Burst mit dem Korrekturfaktor; und
Dekodieren eines Burstblocks , welcher das Burst enthält, wobei der Korrekturfaktor angewandt wird;

wobei der Korrekturfaktor $c = \frac{m_{|sd|}^2}{\sigma_{|sd|}^2}$ ist, wobei

$m_{|sd|}^2$ das Quadrat des mittleren absoluten Werts der weichen Entscheidung (Soft Decision) und $\sigma_{|sd|}^2$ die Varianz des absoluten Werts der weichen Entscheidung ist.

**8.** Verfahren nach Anspruch 7, ferner umfassend Demapping, Entschachtelung und Depunktierung vor der Dekodierung des Burstblocks.

**9.** Verfahren nach Anspruch 8, ferner umfassend das Anfordern mindestens einer Neuübertragung eines fehlerhaften Datenblocks, welche das betreffende Burst mit einem veränderten Punktierungsschema enthält.

**10.** Mobiles Datenkommunikationssystem (10), umfassend die Soft-Decision-Korrekturschaltung nach einem der Ansprüche 1 bis 6 für einen Empfänger desselben.

## Revendications

**1.** Circuit de correction de décision pondérée pour un récepteur possédant d'une part, un égalisateur de canal (22) pour recevoir une rafale et générer un produit de décision pondérée associé à ladite rafale et, d'autre part, un décodeur (32) pour recevoir et décoder un bloc de rafales comprenant ladite rafale, le circuit de correction de décision pondérée ci-décrit servant d'intermédiaire entre ledit égalisateur de canal (22) et ledit décodeur (32) pour calculer un facteur de correction basé sur ledit produit de décision pondérée et pour multiplier ledit produit de décision pondérée dans ladite rafale par ledit facteur de correction ; ledit facteur de correction étant

$c = \frac{m_{|sd|}^2}{\sigma_{|sd|}^2}$, où $m_{|sd|}^2$ est le carré de la moyenne de la valeur absolue de la décision pondérée, et où

$\sigma_{|sd|}^2$ est la variance de la valeur absolue de la décision pondérée.

**2.** Circuit de la revendication 1 comprenant en outre les opérations de dé-mappage, dé-entrelaçage et dé-perforation des blocs (26, 28, 30) réalisées entre ledit égalisateur de canal (22) et ledit décodeur (32).

**3.** Circuit de la revendication 1 ou de la revendication 2 dans lequel ledit décodeur (32) est un décodeur de correction d'erreur sans voie de retour.

**4.** Circuit de l'une quelconque des revendications 1 à 3 dans lequel ledit récepteur est utilisé dans un système de communication mobile (10) pouvant être l'un quelconque des systèmes suivants : GSM (Global System for Mobile communication), EDGE (Enhanced Data rates for GSM Evolution) et GPRS (General Packet Radio Service).

**5.** Circuit de l'une quelconque des revendications 1 à 4 dans lequel ledit égalisateur de canal (22) est un égalisateur Viterbi.

**6.** Circuit de l'une quelconque des revendications 1 à 5 dans lequel ledit récepteur prend en charge une réception à redondance incrémentielle pour demander au moins une retransmission d'un bloc de données, suite à un échec, comprenant ladite rafale en utilisant un schéma différent de perforation.

**7.** Procédé de correction de décision pondérée comprenant :

la réception d'une rafale et son égalisation afin de générer un produit de décision pondérée associé à ladite rafale ;
le calcul d'un facteur de correction basé sur ledit produit de décision pondérée ;
la multiplication dudit produit de décision pondérée dans ladite rafale par ledit facteur de correction ; et le décodage d'un bloc de rafales comprenant ladite rafale à laquelle ledit facteur de correction a été appliqué ;

ledit facteur de correction étant $c = \dfrac{m_{\{sd\}}^{2}}{\sigma_{\{sd\}}^{2}}$ où

$m_{\{sd\}}^{2}$ le carré de la moyenne de la valeur absolue de la décision pondérée et où $\sigma_{\{sd\}}^{2}$ la variance de la valeur absolue de la décision pondérée.

8. Procédé de la revendication 7 comprenant en outre les opérations de dé-mappage, dé-entrelaçage et dé-perforation réalisées avant le décodage dudit bloc de rafales.

9. Procédé de la revendication 8 comprenant en outre la demande d'au moins une retransmission d'un bloc de données, suite à un échec, comprenant ladite rafale en utilisant un schéma différent de perforation.

10. Système de communication mobile de données (10) comprenant le circuit de correction de décision pondérée de l'une quelconque des revendications 1 à 6 pour un récepteur en faisant partie.

Fig. 1

Fig. 2

Fig. 3

Fig. 4

Fig. 5

Fig. 6

Fig. 7

Fig. 8

MCS-9, tux6.1-50km-1950-MHz

Fig. 9

MCS-9, tux6.1-50km-1950-MHz

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004010665 A

**Non-patent literature cited in the description**

- **GREGORY E. BOTTOMLY ; SANDEEP CHENNA-KESHU.** Unification of MLSE Receivers and Extension of Time-Varying Channels. *IEEE Trans. Comm.,* 1998, vol. 46 (4